(19) Europäisches Patentamt
European Patent Office
Office européen des brevets

(11) Publication number: **0 103 952**
**B1**

(12) **EUROPEAN PATENT SPECIFICATION**

(45) Date of publication of patent specification: **28.12.88**

(51) Int. Cl.$^4$: **C 09 B 1/503,** C 09 B 1/515, C 09 B 1/58, C 07 C 97/26, C 07 C 149/30, C 09 K 19/00

(21) Application number: **83304181.7**

(22) Date of filing: **19.07.83**

(54) **Pleochroic anthraquinone dyes.**

(30) Priority: **18.08.82 GB 8223718**

(43) Date of publication of application:
**28.03.84 Bulletin 84/13**

(45) Publication of the grant of the patent:
**28.12.88 Bulletin 88/52**

(84) Designated Contracting States:
**CH DE FR GB IT LI**

(56) References cited:
**EP-A-0 049 036**
**EP-A-0 059 036**
**EP-A-0 108 472**
**EP-A-0 111 197**
**EP-A-0 142 617**
**GB-A-2 082 196**

(73) Proprietor: **IMPERIAL CHEMICAL INDUSTRIES PLC**
**Imperial Chemical House Millbank**
**London SW1P 3JF (GB)**

(72) Inventor: **Newton, David Francis**
**3 Cotswold Avenue**
**High Crompton Shaw Nr.Oldham OL2 7RF (GB)**
Inventor: **Thompson, David John**
**50 Marle Croft**
**Old Hall Park Whitefield Manchester (GB)**

(74) Representative: **Pugsley, Roger Graham et al**
**IMPERIAL CHEMICAL INDUSTRIES PLC Legal Department: Patents PO Box 6 Bessemer Road**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 103 952 B1

**Description**

This invention relates to anthraquinone compounds and methods for their preparation.

GB 2,082,196 discloses anthraquinone derivatives having substituted-thio groups in conjunction with alkyl, amino and/or hydroxy and their use in the coloration of liquid crystal materials. However, this document does not disclose derivatives containing a 1-hydroxy group and a 2-alkyl group. EP 49,036 discloses anthraquinone derivatives containing a 1-hydroxy group and a 2-alkyl group but no substituted-thio groups. Our co-pending EP 59,036 (published 1.9.82) discloses a 1,5-dihydroxy-2,6-dinonyl-4,8-di(substituted-thio)-anthraquinone (Example 23) and a 1,8-dihydroxy-2,7-didodecyl-4,5-di(substituted-thio)-anthraquinone (Example 24) in which the alkyl groups contain nine and twelve carbon atoms respectively.

According to the present invention there is provided an anthraquinone compound according to the formula:

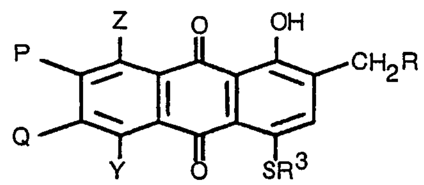

I

wherein:

Y is OH, Z is NHT or $SR^2$, Q is $CH_2R^1$ and P is H; or
Z is OH, Y is NHT or $SR^2$, P is $CH_2R^1$ and Q is H;
R & $R^1$ are independently $C_{1-20}$-alkyl;
$R^2$ & $R^3$ are independently $C_{1-20}$-alkyl, aryl containing up to 15 carbon atoms or $C_{4-8}$-cycloalkyl wherein the alkyl group may be substituted by $C_{1-4}$-alkoxy, halogen or aryl containing up to 15 carbon atoms and the aryl and cycloalkyl groups may be substituted by $C_{1-4}$-alkyl, $C_{4-8}$-cycloalkyl or aryl containing up to 15 carbon atoms; and
T is H or $C_{1-4}$-alkyl;
provided that, when Y or Z is $SR^2$, R and $R^1$ are straight chain alkyl containing from 4 to 7 carbon atoms and $R^2$ and $R^3$ are different.

The alkyl groups represented by R and $R^1$ preferably contain from 3 to 12 and more preferably from 4 to 7 carbon atoms. They are preferably straight chain alkyl groups. It is further preferred that R and $R^1$ are identical.

The alkyl groups represented by $R^2$ and $R^3$ are preferably $C_{1-10}$-alkyl groups. The cycloalkyl groups represented by these symbols are preferably cyclohexyl. The aryl groups represented by $R^2$ and $R^3$ are preferably mono- or bi-carbocyclic aryl groups such as naphthyl or, more especially, phenyl.

Preferred substituents for the alkyl groups are $C_{1-4}$-alkoxy, halogeno or moncyclic aryl, such as phenyl. Preferred substituents for the aryl and cycloalkyl groups are $C_{1-4}$-alkyl, cyclohexyl, and monocyclic aryl, such as phenyl.

Preferred classes of dye with the scope of Formula I are those in which:
Z = OH and Y = $SR^2 \neq SR^3$;
Y = OH and Z = $SR^2 \neq SR^3$;
Z = OH and Y = $NH_2$; and
Y = OH and Z = $NH_2$.

In a preferred class of dyes within the scope of the present invention, as defined in Formula I, Z is OH and Y is $SR^2$, or Y is OH and Z is $SR^2$.

Within the class of dyes represented by Formula I it is preferred that R and $R^1$ are identical and that they represent $C_{3-12}$-alkyl which may be branched or straight chain. It is also preferred that $R^2$ and $R^3$ are different. An especially preferred dye from this class, having particularly good solubility and a high order parameter, is 1,8 - dihydroxy - 2,7 - di - n - heptyl - 4 - phenylthio - 5 - (4 - t - butylphenylthio)anthraquinone. Other useful dyes of this class include 1,8 - dihydroxy - 2,7 - di - n - pentyl - 4 - (t - butylphenylthio) - 5 - phenylthioanthraquinone and 1,5 - dihydroxy - 2,6 - di - (2,4,4 - trimethyl - n - butyl) - 4 - phenylthio - 8 - (4 - t - butylphenylthio) - anthraquinone.

The compounds of Formula I, and especially the aforementioned preferred classes, are useful for the colouration of liquid crystal for use in electronic displays. They have bluish reds shades and generally exhibit high order parameters and/or high solubilities in liquid crystal materials.

Examples of some compounds having particularly useful properties are those of Formula I in which:
P = $CH_2R^1$, R = $R^1$ = n-hexyl, Q = H, Z = OH, Y = phenylthio and $R^3$ = 4-t-butylphenyl;
P = $CH_2R^1$, R = $R^1$ = n-butyl, Q = H, Z = OH, Y = phenylthio and $R^3$ = 4-t-butylphenyl;
P = $CH_2R^1$, R = $R^1$ = 5,5,5-trimethyl-3-methyl-n-pentyl, Q = H, Z = OH, Y = $NH_2$ and $R^3$ = phenyl;
Q = $CH_2R^1$, R = $R^1$ = 5,5,5-trimethyl-3-methyl-n-pentyl, P = H, Y = OH, Z = $NH_2$ and $R^3$ = phenyl.

The dyes of Formula I may be prepared by the substitution of the nitro group in a compound of the formula:

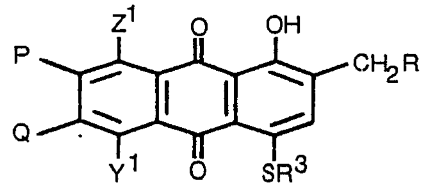

II

wherein:

$Z^1$ is OH, $Y^1$ is $NO_2$, P is $CH_2R^1$ and Q is H; or
$Y^1$ is OH, $Z^1$ is $NO_2$, Q is $CH_2R^1$ and P is H; and
R & $R^1$ are $C_{1-20}$-alkyl,

with a substituted thio group, —$SR^2$, or reduction of the nitro group to an amino group. This amino group may then be alkylated in a conventional manner.

A process for the preparation of certain preferred dyes of Formula I has two stages. The first stage comprises the reaction of a mercaptan, $R^3SH$, with the compound of the formula:

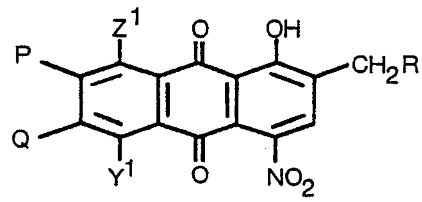

III

wherein P, Q, R, $Y^1$ and $Z^1$ are as previously defined, in pyridine at a temperature around or below 30°C, preferably below 35°C, to give an intermediate compound of Formula II.

The second stage comprises the reaction of the intermediate compound of Formula II with a second mercaptan, $R^2SH$, at a higher temperature. The second stage, the reaction with the second mercaptan, is preferably performed in a polar solvent, more preferably a hydroxylic solvent such as an alkanol, e.g. isopropanol, and is also preferably performed at the reflux temperature of the solvent.

The starting material for the two stage process may be prepared by the reaction of chrysazin or anthrarufin with one or more aldehydes of the formula RCHO and $R^1CHO$ in the presence of pyridine to give a 2,7-dialkylchrysazin or a 2,6-dialkylanthrarufin and nitrating this to give a 2,7-dialkyl-4,5-dinitrochrysazin or a 2,6-dialkyl-4,8-dinitroanthrarufin of Formula III.

The reduction product, derived from the compound of Formula II wherein $Y^1$ or $Z^1$ is $NO_2$, may be prepared from the compound of Formula II by reduction of the $NO_2$ group with a mixture of sodium sulphide and sulphur in an aqueous medium, optionally followed by methylation of the $NH_2$ group.

Preferred compounds within this class are those of Formula I in which Z is OH and Y is $NH_2$ and those in which Y is OH and Z is $NH_2$. Examples of such compounds are 1,8 - dihydroxy - 2,7 - di(3,5,5,5 - tetramethyl - n - pentyl) - 4 - phenylthio - 5 - amino - anthraquinone and 1,5 - dihydroxy - 4 - phenylthio - 8 - amino - 2,6 - di - (3,5,5,5 - tetramethyl - n - pentyl)anthraquinone.

The invention is further illustrated by the following Examples in which all parts and percentages are by weight unless otherwise indicated and the letters "AQ" are used to represent anthraquinone.

## Example 1

(a) Preparation of 1,5-dihydroxy-2,6-dinonyl-4-phenylthio-8-nitroanthraquinone

A mixture of 1.1 ml (0.01 moles) of thiophenol and 5.8 g of 1,5-dihydroxy-2,6-dinonyl-4,8-dinitro-AQ (0.01 moles) in 50 ml pyridine was stirred for 30 minutes at room temperature and then drowned out into 100 ml water. Concentrated HCl (75 ml) was added and the precipitate solid was filtered, washed with water and dried to yield 6 g of crude material. A portion of this (3 g) was recrystallised from 100—120 petroleum ether to yield 1.3 g of the intermediate 1,5-dihydroxy-2,6-dinonyl-4-phenylthio-8-nitro-AQ (structure confirmed by mass spectrometry).

(b) Preparation of 1,5-dihydroxy-2,6-dinonyl-4-phenylthio-8-aminoanthraquinone

A solution of 10 g of $Na_2S.9H_2O$ and 2 g of sulphur in 20 ml of water was added to 3.0 g of the product of Example 1(a) in 100 ml of water and 50 ml of pyridine and heated to 90°C. After 1 hour at 90°C the pyridine was evaporated and the remainder cooled to 60°C. The oil which separated was extracted into 100—120 petroleum ether and the water removed (by Dean and Stark). The solution was purified by passage through a silica gel column and a small quantity of HCl added to precipitate a solid. The solid (1.2 g) was dried at 70°C and the structure confirmed by mass spectral and NMR analysis.

Example 2

(a) Preparation of 1,8-dihydroxy-2,7-dinonyl-4-phenylthio-5-nitro-AQ

The procedure of Example 1(a) was repeated using 5.8 g of 1,8-dihydroxy-2,7-dinonyl-4,5-dinitro-AQ (0.01 moles) in place of the 5.8 g of 1,5-dihydroxy-2,6-dinonyl-4,8-dinitro-AQ.

(b) Preparation of 1,8-dihydroxy-2,7-dinonyl-4-phenylthio-5-amino-AQ

The procedure of Example 1(b) was repeated using 3.0 g of 1,8-dihydroxy-2,7-dinonyl-4-phenylthio-5-nitro-AQ from Example 2(a) in place of the starting material of Example 1(b).

The 1,5-dihydroxy-2,6-dinonyl-4,8-dinitro-AQ and the 1,8-dihydroxy-2,7-dinonyl-4,5-dinitro-AQ were made according to the method described in UK Patent Specification No. 2038809A by reacting 1,5-dihydroxy-AQ and 1,8-dihydroxy-AQ, respectively, with nonanal and nitrating the di-nonyl derivatives. The alkyl radical in the nonanal used in Examples 1 and 2 had the formula:

$$—CH_2.CH_2.CH(CH_3).CH_2.C(CH_3)_3$$

Example 3

(a) Preparation of 2,7-Di-n-pentylchrysazin

Chrysazin (120 g) was stirred into a solution of 120 g of sodium hydroxide in a mixture of water (1500 ml) and pyridine (220 ml) at 55°C. Sodium hydrosulphite (200 g) was added to the mixture which was stirred under $N_2$ for 30 minutes before addition of a further 100 g of sodium hydrosulphite. The reaction mixture was heated to 80°C, over 30 minutes during which period was added, dropwise, n-pentanal (142 g) and the mixture stirred for 2 hours at 80°C still under $N_2$. It was then cooled to room temperature, poured into an acidified ice/water mixture (ice/water: 4 litres and 35% HCl: 700 ml), in which it was stirred for 2 hours, filtered and the filter cake washed with water. The tarry cake was slurried in 400 ml of ethyl acetate, filtered, washed with methanol and pulled until damp-dry. This paste was recrystallised from ethyl acetate to give 83 g of dry product (yield 45%) melting at 127°C. Elemental analysis gave C = 76.1% (75.8%) and H = 7.5% (7.4%).

(b) Preparation of 2,7-Di-n-pentyl-4,5-dinitrochrysazin

2,7-Dipentylchrysazin (56 g) from Example 3(a) was stirred in 800 ml of 98% sulphuric acid at room temperature for 30 minutes and then cooled to 0°C. To the cooled mixture was added, dropwise over a period of 30 minutes while maintaining the temperature $<10$°C, 160 ml of an anhydrous nitration acid, comprising 33% nitric acid and 67% sulphuric acid, and the mixture stirred for 2 hours at $<10$°C. The mixture was then poured into 4 litres of ice/water, stirred at room temperature for 30 minutes, filtered, washed acid-free and dried to give 50.5 g (yield 73%) of dry product melting at 140°C. Elemental analysis gave C = 58.8% (61.3%), H = 5.4% (5.5%) and N = 5.5% (6.0%).

(c) Preparation of 2,7-Di-n-pentyl-4-phenylthio-5-nitrochrysazin

To a mixture of 9.4 g of 2,7-di-n-pentyl-4,5-dinitrochrysazin from Example 3(b) in 200 ml of pyridine at 20°C there was added a solution of 2.2 ml of thiophenol in 50 ml of pyridine. The colour of the mixture gradually changed from orange-brown to red and after 2 hours at 20°C was drowned into water, filtered, washed successively with water and methanol and dried to yield 9.5 g of product (88% theory). The structure was confirmed by mass spectrometry and elemental analysis, C = 67.5 (67.5) H = 5.8 (5.8) S = 6.7 (6.0) and N = 3.0 (2.7). This product had a molar extinction coefficient of 12,541 at 540 nm in chloroform.

(d) Preparation of 2,7-di-n-pentyl-4-phenylthio-5-(4-t-butylphenylthio)chrysazin

To a mixture of 1.7 ml of 4-t-butylphenylmercaptan and 0.4 g of KOH in 50 ml of isopropanol at 60°C was added 3.7 g of the product of Example 3(c) and the temperature raised to 80°C for 1.5 hour. It was then cooled to room temperature, filtered, washed successively with isopropanol and methanol and dried to give 3.5 g of product. After recrystallisation from petroleum ether, the structure was confirmed by mass spectrometry and elemental analysis, C = 73.0 (73.6) H = 6.5 (6.8) S = 9.1 (9.8). This product had a molar extinction coefficient of 19.183 at 592 nm in chloroform.

Example 4

(a) Preparation of 2,7-Di-n-heptyl-chrysazin

The process of Example 3(a) was repeated except for the replacement of the 142 g of n-pentanal with 171 g of n-heptanal. The quantity of dry product was 103 g (yield 47.6%) which melted at 116—118°C. Elemental analysis gave C = 76.1% (75.8%) and H = 7.5% (7.4%).

(b) Preparation of 2,7-Di-n-heptyl-4,5-dinitrochrysazin

The process of Example 3(b) was repeated using 87.2 g of 2,7-di-n-heptylchrysazin in place of the 56 g of 2,7-di-n-pentylchrysazin and increasing the quantity of the other ingredients by 25%. The quantity of dry product was 50.5 g (yield 69.1%) melting at 140°C. Elemental analysis gave C = 58.8% (61.3%), H = 5.4% (5.5%) and N = 5.5% (6.0%).

(c) Preparation of 2,7-Di-n-heptyl-4-phenylthio-5-nitrochysazin

The process of Example 3(c) was repeated using 9.6 g of 2,7-n-heptyl-4,5-dinitrochrysazin in place of the 9.4 g of 2,7-di-n-pentyl-4,5-dinitrochrysazin. The structure was confirmed by mass spectrometry. This product had a molar extinction coefficient of 12,095 at 540 nm in chloroform.

(d) Preparation of 2,7-Di-n-heptyl-4-phenylthio-5-(4-t-butylphenylthio)chrysazin

The process of Example 3(d) was repeated using 3.8 g of 2,7-di-n-heptyl-4-phenylthio-5-nitrochrysazin in place of the 3.7 g of 2,7-di-n-pentyl-4-phenylthio-5-nitrochrysazin. After recrystallisation from petroleum ether, the structure was confirmed by mass spectrometry. This product had a molar extinction coefficient of 19,650 at 592 nm in chloroform.

Example 5

A black mixture dye was made by mixing together 8 parts of 2,7-di-n-pentyl-4,5-diaminochrysazin (blue), the product of Example 1(c) of our co-pending UK Patent Specification No. 2122632A, 15 parts of 2,7-di-n-heptyl-4-phenylthio-5-(4-t-butylphenylthio)-chrysazin (violet), the product of Example 4(d) above and 20 parts of 1-phenylthio-5-(4-t-butyl-phenylthio)-anthraquinone (yellow), the product of Example 11 in UK Patent Specification No. 2094822A.

Example 6

Another black mixture dye was prepared from the same dyes as the mixture of Example 5, by mixing 12 parts of the blue dye, 20 parts of the violet dye and 30 parts of the yellow dye.

Example 7

A black mixture was made by mixing together 10 parts of the blue dye used in Example 5, 10 parts of the violet dye used in Example 5, 20 parts of the yellow dye used in Example 5, 30 parts of 1,5-di(4-t-butylphenylthio)-4-phenylthioanthraquinone (orange), the product of Example 22 in UK Patent Specification No. 2094822A and 10 parts of the partially methylated derivative of the blue dye used in Example 5 above (blue green), the product of Example 6(a) of our co-pending UK Patent Specification No. 2122632A. This black mixture exhibits an excellent flat absorbance of 0.8 in the liquid crystal material, E43 in a $12 \times 10^6$m cell, over the range 450 nm to 650 nm.

The compounds described in the Examples have the properties identified in Table I as solutions in the liquid crystal medium, E43, at 20°C, unless otherwise stated. E43 contains the compounds:

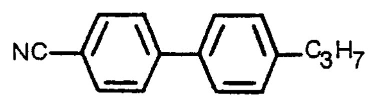

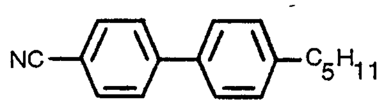

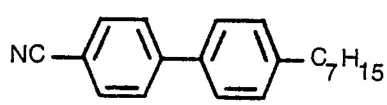

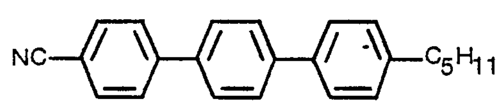

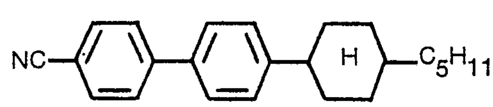

and is available from BDH Chemicals Limited of Broom Road, Poole, Dorset, England.

TABLE 1

| Example | Solubility (%) | max (nm) | Order Parameter |
|---|---|---|---|
| 1(b) | 5.8 | 565/610 | 0.73 |
| 2(b) | 6.2 | 565/610 | 0.74 |
| 3(d) | 2.5 | 580/542 | 0.77 |
| 4(d) | 7.2 | 580/542 | 0.78 |

**Claims**

1. An anthraquinone compound of the formula:

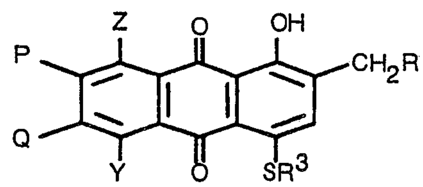

I

wherein:

Y is OH, Z is NHT or $SR^2$, Q is $CH_2R^1$ and P is H; or
Z is OH, Y is NHT or $SR^2$, P is $CH_2R^1$ and Q is H;
R & $R^1$ are independently $C_{1-20}$-alkyl;
$R^2$ & $R^3$ are independently $C_{1-20}$-alkyl, aryl containing up to 15 carbon atoms or $C_{4-8}$-cycloalkyl wherein the alkyl group may be substituted by $C_{1-4}$-alkoxy, halogen or aryl containing up to 15 carbon atoms and the aryl and cycloalkyl groups may be substituted by $C_{1-4}$-alkyl, $C_{4-8}$-cycloalkyl or aryl containing up to 15 carbon atoms; and
T is H or $C_{1-4}$-alkyl;
provided that, when Y or Z is $SR^2$, R and $R^1$ are straight chain alkyl contaiing from 4 to 7 carbon atoms and $R^2$ and $R^3$ are different.

2. An anthraquinone compound according to Claim 1 wherein Y is OH and Z is $SR^2$ or Z is OH and Y is $SR^2$.

3. An anthraquinone compound according to Claim 1 wherein $R^2$ and $R^3$ are $C_{1-4}$-alkylphenyl.

4. An anthraquinone compound according to any one of Claims 1 to 3 wherein R and $R^1$ are the same and $C_{4-7}$-alkyl.

5. 1,8-Dihydroxy-2,7-di-n-heptyl-4-phenylthio-5-(4-t-butylphenylthio)-anthraquinone.

6. A process for the preparation of an anthraquinone compound according to any one of Claims 1 to 5 wherein Y or Z is $SR^2$ which comprises the reaction of a compound of the formula:

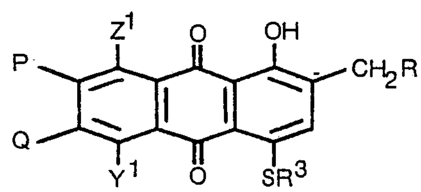

II

wherein
$Y^1$ is OH, $Z^1$ is $NO_2$, Q is $CH_2R^1$ and P is H; or
$Z^1$ is OH, $Y^1$ is $NO_2$, P is $CH_2R^1$ and Q is H;
with a mercaptan, $R^2SH$ at a temperature above 35°C, in which R, $R^1$, $R^2$ and $R^3$ are as hereinbefore defined.

**Patentansprüche**

1. Eine Anthrachinonverbindung der Formel:

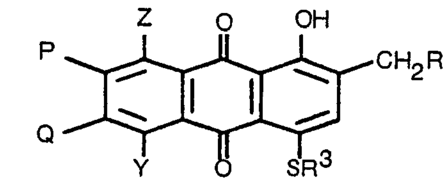

I

worin

$Y = OH$, $Z = NHT$ oder $SR^2$, $Q = CH_2R^1$ und $P = H$; oder

$Z = OH$, $Y = NHT$ oder $SR^2$, $P = CH_2R^1$ und $Q = H$;

R und $R^1$ unabhängig voneinander $C_{1-20}$-Alkyl sind;

$R^2$ und $R^3$ unabhängig voneinander $C_{1-20}$-Alkyl, Aryl mit bis zu 15 Kohlenstoffatomen oder $C_{4-8}$-Cycloalkyl sind, wobei die Alkylgruppe durch $C_{1-4}$-Alkoxy, Halogen oder Aryl mit bis zu 15 Kohlenstoffatomen substituiert sein kann und die Aryl- und Cycloalkylgruppen durch $C_{1-4}$-Alkyl, $C_{4-8}$-Cycloalkyl oder Aryl mit bis zu 15 Kohlenstoffatomen substituiert sein können; und

$T = H$ oder $C_{1-4}$-Alkyl;

mit der Maßgabe daß dann, wenn Y oder Z $SR^2$ sind, R und $R^1$ geradkettige Alkylgruppen mit von 4 bis 7 Kohlenstoffatomen sind und $R^2$ und $R^3$ unterschiedlich sind.

2. Eine Anthrachinonverbindung nach Anspruch 1, worin $Y = OH$ und $Z = SR^2$ oder $Z = OH$ und $Y = SR^2$.

3. Eine Anthrachinonverbindung nach Anspruch 1, worin $R^2$ und $R^3$ $C_{1-4}$-Alkyl-phenylgruppen sind.

4. Eine Anthrachinonverbindung nach irgendeinem der Ansprüche 1 bis 3, worin R und $R^1$ gleich sind und $C_{4-7}$-Alkylgruppen sind.

5. 1,8-Dihydroxy-2,7-di-n-heptyl-4-phenylthio-5-(4-t-butylphenylthio)-anthrachinon.

6. Verfahren zur Herstellung einer Anthrachinonverbindung nach irgendeinem der Ansprüche 1 bis 5, worin Y oder Z $SR^2$ sind, das die Umsetzung einer Verbindung der Formel:

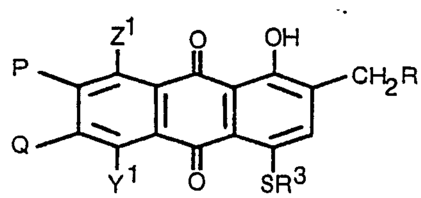

II

worin

$Y^1 = OH$, $Z^1 = NO_2$, $Q = CH_2R^1$ und $P = H$; oder

$Z^1 = OH$, $Y^1 = NO_2$, $P = CH_2R^1$ und $Q = H$

mit einem Mercaptan $R^2SH$ bei einer Temperatur oberhalb 35°C umfaßt, wobei R, $R^1$, $R^2$ und $R^3$ wie weiter oben definiert sind.

**Revendications**

1. Composé anthraquinonique de formule:

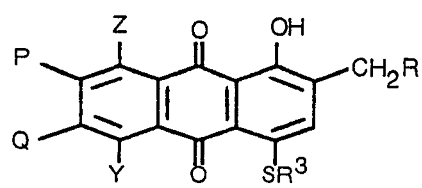

I

dans laquelle

Y est un groupe OH, Z est un groupe NHT ou $SR^2$,

Q est un groupe $CH_2R^1$ et P est l'hydrogène; ou bien

Z est un groupe OH, Y est un groupe NHT ou $SR^2$,

P est un groupe $CH_2R^1$ et Q est l'hydrogène;

R & $R^1$ représentent indépendamment des groupes alkyle en $C_1$ à $C_{20}$;

$R^2$ & $R^3$ représentent indépendamment des groupes alkyle en $C_1$ à $C_{20}$, aryle contenant jusqu'à 15 atomes de carbone ou cycloalkyle en $C_4$ à $C_8$ dont le groupe alkyle peut être substitué par un radical alkoxy en $C_1$ à $C_4$;, halogéno ou aryle contenant jusqu'à 15 atomes de carbone et les groupes aryle et cycloalkyle peuvent être substitués par des radicaux alkyle en $C_1$ à $C_4$, cycloalkyle en $C_4$ à $C_8$ ou aryle contenant jusqu'à 15 atomes de carbone; et

T est l'hydrogène ou un groupe alkyle en $C_1$ à $C_4$;
sous réserve que lorsque Y ou Z représente un groupe $SR^2$, R et $R^1$ soient des groupes alkyle à chaîne droite contenant 4 à 7 atomes de carbone, et $R^2$ et $R^3$ soient différents.

2. Composé anthraqinonique suivant la revendication 1, dans lequel Y est un groupe OH et ZX est un groupe $SR^2$ ou bien Z est un groupe OH et Y est un groupe $SR^2$.

3. Composé anthraqinonique suivant la revendication 1, dans lequel $R^2$ et $R^3$ sont des groupes (alkyle en $C_1$ à $C_4$)-phényle.

4. Composé anthraqinonique suivant l'une quelconque des revendications 1 à 3, dans lequel R et $R^1$ sont identiques et sont des groupes alkyle en $C_4$ à $C_7$.

5. 1,8-dihydroxy-2,7-di-n-heptyl-4-phénylthio-5-(4-tertio-butylphénylthio)-anthraquinone.

6. Procédé de préparation d'un composé anthraquinonique suivant l'une quelconque des revendications 1 à 5, dans lequel Y ou Z est un groupe $SR^2$, qui comprend la réaction d'un composé de formule:

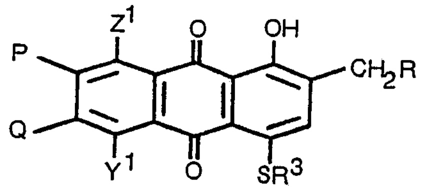

II

dans laquelle

$Y^1$ est un groupe OH, $Z^1$ est un groupe $NO_2$

Q est un groupe $CH_2R^1$ et P est l'hydrogène; ou bien

$Z^1$ est un groupe OH, $Y^1$ est un groupe $NO_2$, P est un groupe $CH_2R^1$ et Q est l'hydrogène;

avec un mercaptan, $R^2SH$, à une température supérieure à 35°C, les symboles R, $R^1$, $R^2$ et $R^3$ ayant les définitions données ci-dessus.